# EUROPÄISCHE PATENTSCHRIFT

(11) **EP 3 557 213 B1**
(45) Veröffentlichungstag und Bekanntmachung des Hinweises auf die Patenterteilung: **06.01.2021**
(21) Anmeldenummer: 18405010.2
(22) Anmeldetag: 16.04.2018
(51) Int. Cl.: G01M 3/22, B08B 15/02, B25H 1/20

(54) **MESSVORRICHTUNG ZUR DURCHFÜHRUNG VON SICHERHEITSTESTS AN EINER ALS CONTAINMENT AUSGEBILDETEN WERKBANK**
MEASURING DEVICE FOR PERFORMING SAFETY TESTS AT A CONTAINMENT WORKBENCH
DISPOSITIF DE MESURE PERMETTANT DE METTRE EN OEUVRE DES ESSAIS DE SÉCURITÉ SUR UN ÉTABLI CONÇU SOUS LA FORME DE CONFINEMENT

(43) Veröffentlichungstag der Anmeldung: 23.10.2019
(73) Patentinhaber: SKAN AG, 4123 Allschwil (CH)
(72) Erfinder: Bittner, Matthias, DE-79650 Schopfheim (DE); Moirandat, Claude, CH-4123 Allschwil (CH)
(74) Vertreter: Ullrich, Gerhard

(56) Entgegenhaltungen:
- DE-A1-102015 109 314
- US-A- 4 381 664

## Beschreibung

### Anwendungsgebiet der Erfindung

Die Erfindung betrifft eine Messvorrichtung zur Durchführung von Sicherheitstests an einer als Containment ausgebildeten und im Betriebsmodus befindlichen Werkbank. Die von einem Gehäuse umgebene Werkbank weist eine interne Arbeitskammer mit einer Arbeitsfläche sowie eine in die Arbeitskammer Zugang gewährende Arbeitsöffnung auf. Die Messvorrichtung besitzt ein Verteilerorgan zum Eintrag eines Testmediums in die Arbeitskammer und Aussensensoren zur Messung der durch die Arbeitsöffnung nach aussen gelangenden Konzentration an Testmedium. Werkbänke haben je nach Verwendung die Funktion für den Produktschutz, und/oder den Personenschutz und/oder den Umgebungsschutz und sind demnach verschieden als einfache oder aufgerüstete Laborabzüge bzw. als Sicherheitswerkbank für den Umgang mit aktiven und toxischen Substanzen konstruiert.

### Stand der Technik

Gegenstand der DE 10 2015 109 314 A1 ist ein Prüfverfahren zur Durchführung von Sicherheitstests an einer als Containment ausgebildeten und im Betriebsmodus befindlichen Abzugsvorrichtung in Gestalt einer Werkbank. Die von einem Gehäuse umgebene Werkbank weist eine interne Arbeitskammer mit einer Arbeitsfläche sowie eine in die Arbeitskammer Zugang gewährende Arbeitsöffnung auf. Die dabei verwendete Vorrichtung umfasst zur Erzeugung eines Testaerosols einen Vorratsbehälter mit dem darin enthaltenen Testmedium und eine DruckluftZuführung in den Vorratsbehälter. Als Testmedium werden Mineralstäube eingesetzt. Über ein Verteilerorgan erfolgt der Eintrag des Testaerosols in die Arbeitskammer. Eine im Abstand zur Arbeitsöffnung verstellbare Messvorrichtung dient zur Erfassung der durch die Arbeitsöffnung nach aussen gelangenden Konzentration an Testmedium.

Die US 4,381,664 offenbart ebenfalls ein Verfahren und eine Vorrichtung zur Durchführung von Sicherheitstests an derartigen Werkbänken. Das in die Arbeitskammer eingebrachte Testaerosol wird auf einer hochtourig laufenden Schleuderscheibe mit auftropfender Kaliumjodid-Lösung erzeugt. Wiederum wird mittels einer im Abstand zur Arbeitsöffnung verstellbare Messvorrichtung die austretende Konzentration an Testmedium erfasst. Ein aus Rohrstücken zusammensetzbarer Arm simuliert den Arm eines Bedieners.

Diese Prüfeinrichtungen erbringen nur wenig praxisnahe Ergebnisse, da die in der Realität an Werkbänken existierenden Arbeitsabläufe und -bedingungen nicht erfasst werden. Es fehlen die typischen Störfaktoren und Vergleichsmessungen. Ausserdem erfordert die Durchführung der Sicherheitstests hohen Zeitaufwand und verlangt anschliessend eine mühsame Reinigung der getesteten Werkbank.

### Aufgabe der Erfindung

Angesichts der bisher bekannten Messvorrichtungen, welche nur wenig realitätsnahe Sicherheitstests an Werkbänken, in der Spannweite von simplen Laborabzügen, höherwertigen Laborabzügen bis hin zu Sicherheitswerkbänken, erlauben, und zudem von beschränkter Bedienungsfreundlichkeit durch übergebührlichen Zeit- und oft nachträglichem Reinigungsaufwand sind, liegt der Erfindung die Aufgabe zugrunde, eine verbesserte Messvorrichtung zur Durchführung von derartigen Sicherheitstests vorzuschlagen. Hierbei kommt es darauf an - zum Schutz des an den Werkbänken tätigen Bedienpersonals -, bei praxisnahen Arbeitsabläufen und -bedingungen, zuverlässige Messergebnisse zur Erhöhung der Arbeitssicherheit und zur Vermeidung von Gefährdungssituationen, zu ermitteln. Zugleich sollen die Sicherheitstests zeit- und aufwandseffizient durchführbar sein.

### Übersicht über die Erfindung

Die Messvorrichtung nach Anspruch 1 ist zur Durchführung von Sicherheitstests an einer als Containment ausgebildeten und im Betriebsmodus befindlichen Werkbank konzipiert. Die von einem Gehäuse umgebene Werkbank weist eine interne Arbeitskammer mit einer Arbeitsfläche sowie eine in die Arbeitskammer Zugang gewährende Arbeitsöffnung auf. Die Messvorrichtung besitzt ein Verteilerorgan zum Eintrag eines Testmediums in die Arbeitskammer und Aussensensoren zur Messung der durch die Arbeitsöffnung nach aussen gelangenden Konzentration an Testmedium. Das Testmedium ist eine Flüssigkeit oder eine Partikelsubstanz, die sich mittels Druckluft als Testaerosol über das Verteilerorgan in die Arbeitskammer verteilen lässt. Das Verteilerorgan umfasst zumindest eine, vorzugsweise mehrere Düsen, die auf einem Düsenträger positioniert sind. Dabei ist der Düsenträger entlang einer Breitenerstreckung der Arbeitskammer auf einer Transversalachse verschiebbar und mit einem Schlitten verbunden, wobei der Schlitten auf einer Führung angeordnet ist. Mit dem Schlitten ist ein zumindest im Wesentlichen ausserhalb der Arbeitskammer positionierbarer und der Arbeitsöffnung zugewandter Dummy verbunden ist. Der Dummy stellt eine Nachbildung eines Oberkörpers einer an der Werkbank tätigen Bedienperson dar, und die der Arbeitsöffnung zugewandte Seite des Dummys dient als Träger für die Aussensensoren.

Nachfolgend werden spezielle Ausführungsformen der Erfindung definiert: Zur Erzeugung des Testaerosols ist ein Vorratsbehälter mit dem darin enthaltenen Testmedium und in den Vorratsbehälter eingespeiste Druckluft vorgesehen. Vorzugsweise ist der Vorratsbehälter integraler Bestandteil der Messvorrichtung. Das Testmedium ist ein Lösungsmittel, nämlich in Form einer Flüssigkeit, ein Alkohol, wie Isopropanol oder n-Propanol. Oder das Testmedium liegt als Partikelsubstanz vor, z.B. Kaliumjodid oder Di-Ethyl-Hexyl-Sebacat (DEHS).

Der Dummy umfasst ferner die Nachbildung der Arme einer an der Werkbank tätigen Bedienperson, und die Arme sind im Testbetrieb der Messvorrichtung dazu bestimmt, sich durch die Arbeitsöffnung in die Arbeitskammer zu erstrecken und so die Luftströmung im Bereich der Arbeitsöffnung praxisnah zu gestalten.

Die Arme stützen den Düsenträger sowie einen Störkörper, wobei der Störkörper einen typischerweise auf der Arbeitsfläche stehenden Laborgegenstand zwecks realitätsnaher Ablenkung des Strömungsverlaufs in der Arbeitskammer simuliert und beheizbar sein kann.

Die Arme haltern ferner ein Stützrad, welches dazu bestimmt ist, im Testbetrieb der Messvorrichtung auf der Arbeitsfläche gewichts-entlastend aufzusetzen und beim Bewegen entlang der Transversalachse auf der Arbeitsfläche abzurollen. In der Arbeitskammer, vorzugsweise an den Armen, sind Innensensoren zur Messung der in der Arbeitskammer vorhandenen Konzentration an Testmedium installiert. Innerlich der Arme sind Stoffleitungen zur Beschickung der Düsen geführt.

Im Aufstellraum der Werkbank ist ein Referenzsensor installiert, welcher dazu vorgesehen ist, einen Nullpunktabgleich mit den Aussensensoren zu bewirken, falls diese eine Konzentration an Testmedium detektieren, welches von einer äusseren Quelle, also nicht aus der Arbeitskammer stammt. Der Referenzsensor liefert Messwerte, vorzugsweise über ein Signalkabel, an eine Elektronikplatine zwecks Signalverarbeitung. Die Messvorrichtung umfasst eine Auswerteeinheit zur Protokollierung und Anzeige der ermittelten Messdaten. Jeder Aussensensor, jeder Innensensor und der Referenzsensor umfasst einen Gassensor sowie jeweils eine zugehörige Justierplatine zur Kalibrierung der von den Gassensoren in der Aerosolwolke bzw. am Referenzsensor gemessenen Werte.

Zur Visualisierung der sich im Bereich der Arbeitsöffnung herausgebildeten Luftströmung ist zuvorderst an den Armen, vorzugsweise am Störkörper, ein Nebelauslass vorgesehen, an den eine Stoffleitung für die Prüfnebelzufuhr angeschlossen ist. Die Messvorrichtung ist auf einem mobilen, vorzugsweise verfahrbaren, Ständer angeordnet.

### Kurzbeschreibunq der beigefügten Zeichnungen

Es zeigen:

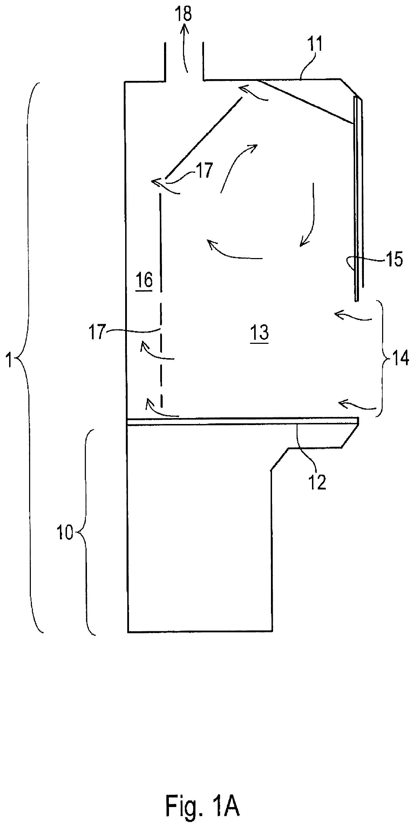

- Figur 1A -: Einen ersten Typ einer als Containment ausgebildeten Werkbank, hier in Gestalt eines einfachen Laborabzugs, mit der darin vorhandenen Luftführung, als Prinzipdarstellung in Seitenansicht;

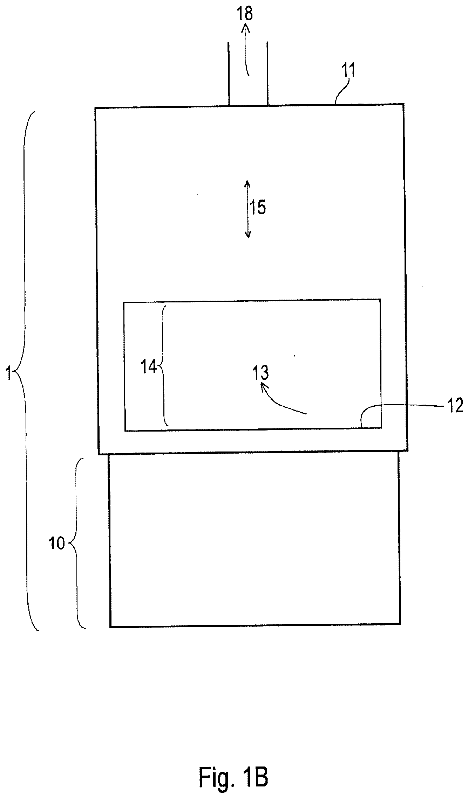

- Figur 1B -: die Anordnung gemäss Figur 1A, als Prinzipdarstellung in Frontansicht;

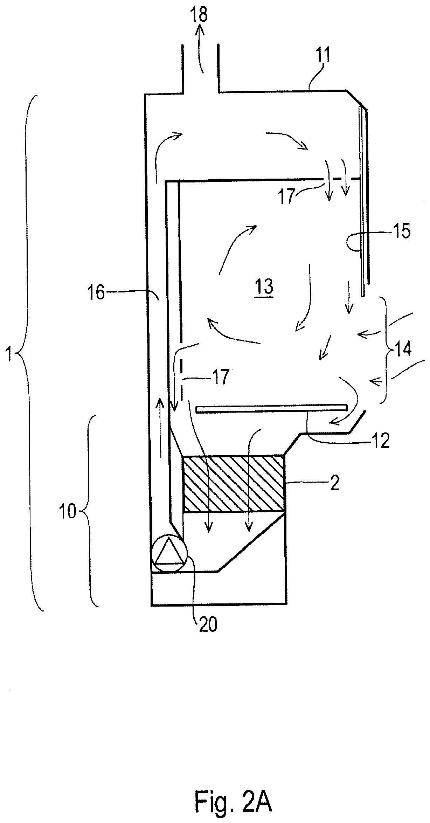

- Figur 2A -: einen zweiten Typ einer Werkbank, hier in Gestalt eines höherwertigen Laborabzugs, mit einer Filtereinheit und eingebautem Ventilator, mit partiell rezirkulierender Luftführung, als Prinzipdarstellung in Seitenansicht;

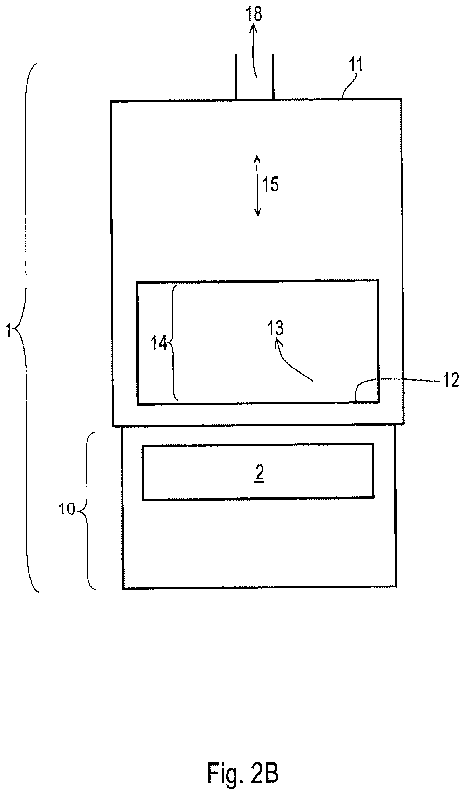

- Figur 2B -: die Anordnung gemäss Figur 2A, als Prinzipdarstellung in Frontansicht;

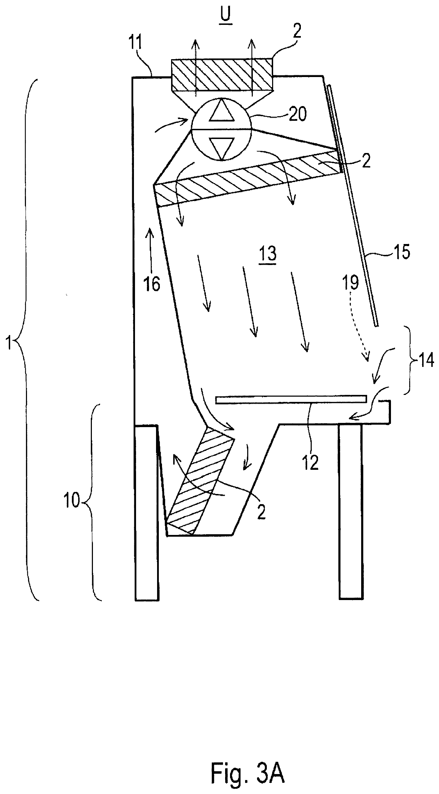

- Figur 3A -: einen dritten Typ einer Werkbank, hier in Gestalt einer Sicherheitswerkbank, mit mehreren Filtereinheiten und eingebautem bi-direktionalem Ventilator, mit partiell rezirkulierender Luftführung, als Prinzip- darstellung in Seitenansicht;

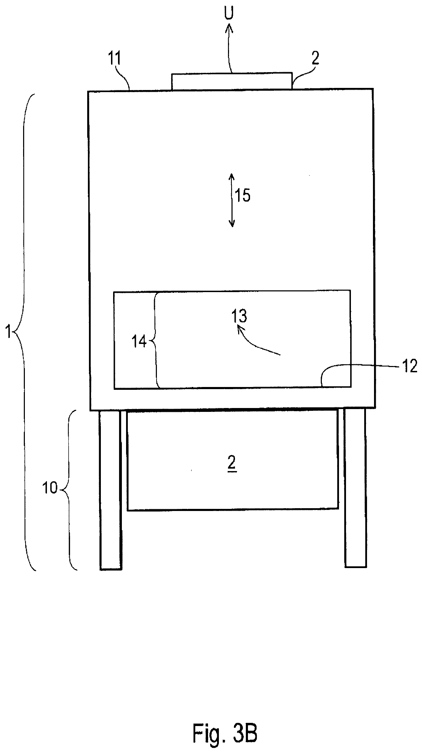

- Figur 3B -: die Anordnung gemäss Figur 3A, als Prinzipdarstellung in Frontansicht;

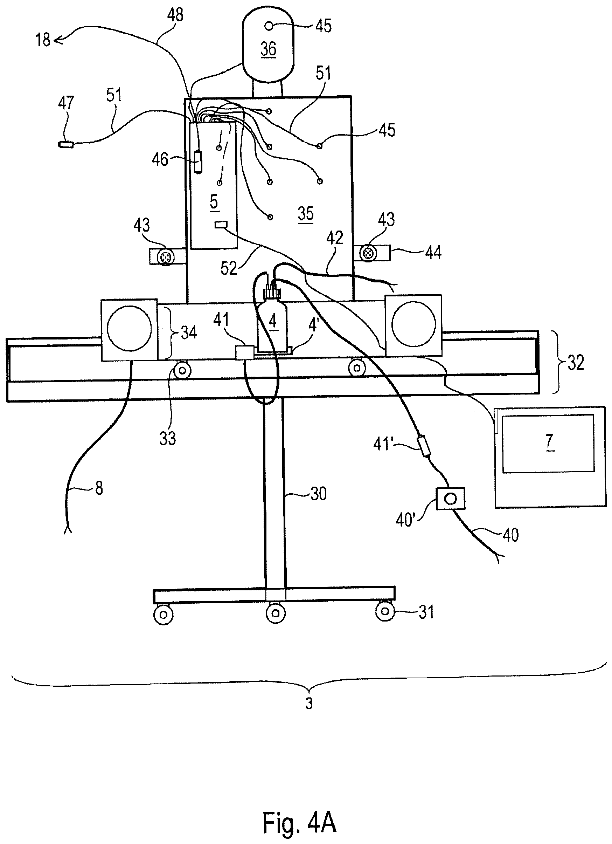

- Figur 4A -: die erfindungsgemässe Messvorrichtung, als Prinzipdarstellung in Frontansicht;

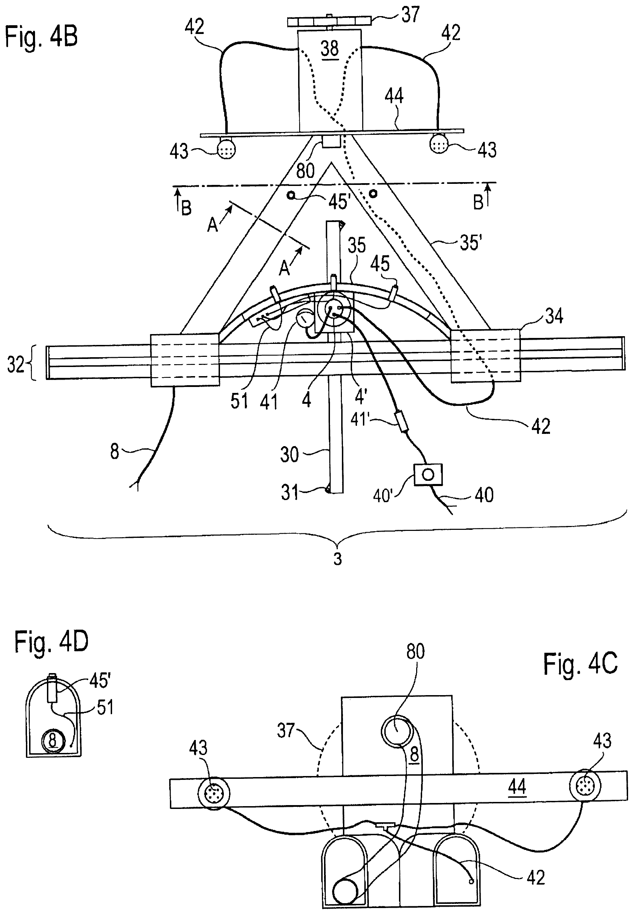

- Figur 4B -: die Anordnung gemäss Figur 4A, als Prinzipdarstellung in Draufsicht;
- Figur 4C -: eine vergrösserte Schnittdarstellung auf der Linie B-B in Figur 4B;
- Figur 4D -: eine vergrösserte Schnittdarstellung auf der Linie A-A in Figur 4B;

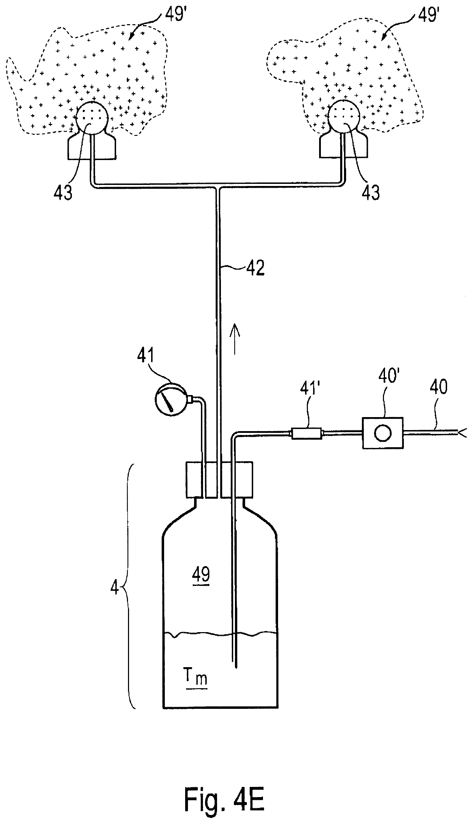

- Figur 4E -: den Strömungsverlauf des Testaerosols durch die Messvorrichtung gemäss Figur 4A, als Prinzipdarstellung;

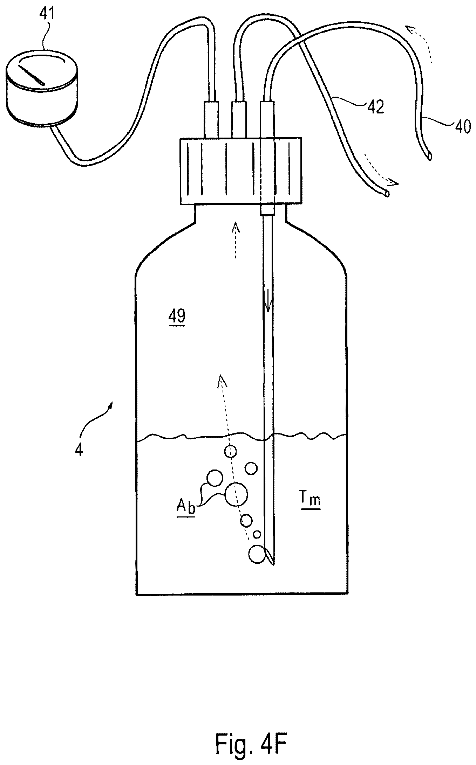

- Figur 4F -: den Vorratsbehälter aus der Anordnung gemäss Figur 4A mit seinen Anschlüssen zur Bereitstellung des Testaerosols, in vergrösserter Prinzipdarstellung;

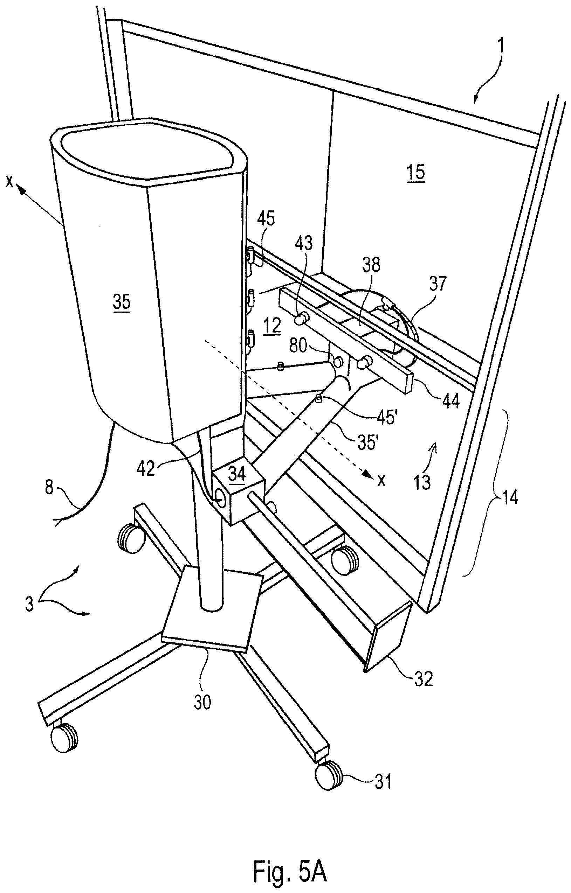

- Figur 5A -: die Messvorrichtung gemäss Figur 4A in die Arbeitskammer einer Werkbank eingefahren, in Perspektivdarstellung;

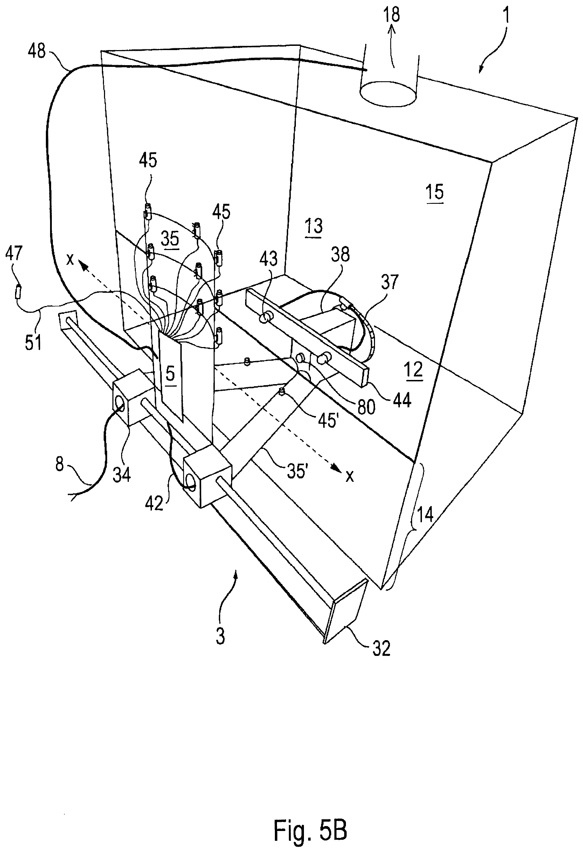

- Figur 5B -: die Anordnung gemäss Figur 5A, mit weitgehend ausgeblendetem Dummy, in veränderter Perspektive;

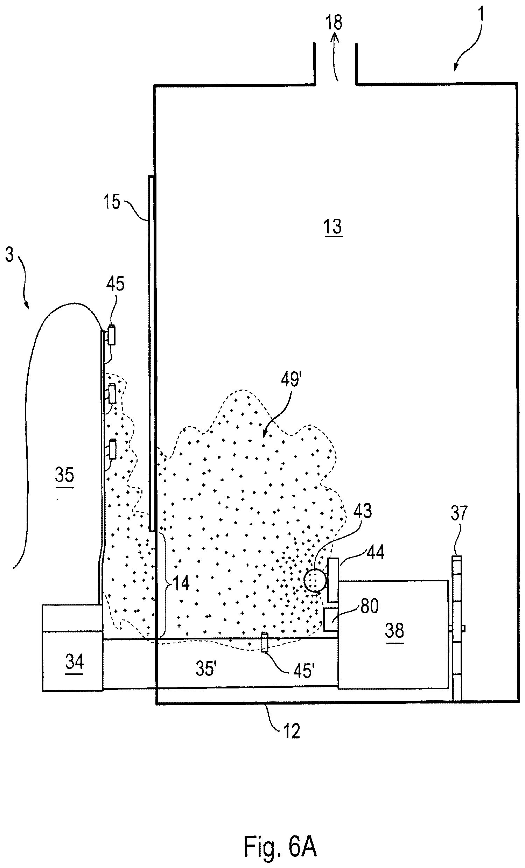

- Figur 6A -: die Anordnung gemäss Figur 5B, in der Situation eines durch die Arbeitsöffnung der Werkbank geschehenen Ausbruchs der Wolke des Testaerosols, als Prinzipdarstellung in Seitenansicht;

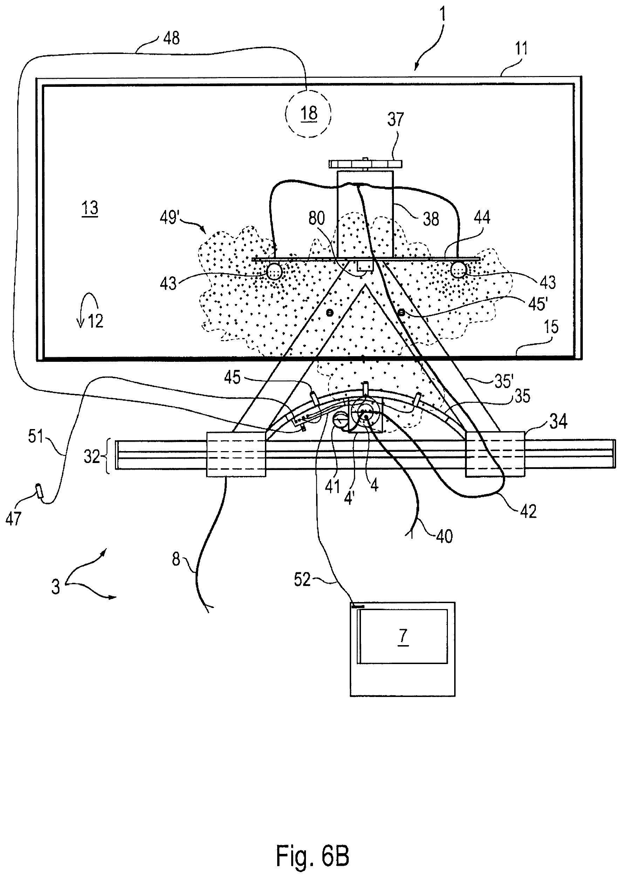

- Figur 6B -: die Situation gemäss Figur 6A, als Prinzipdarstellung in Draufsicht; und
- Figur 7 -: den Signalfluss in der Messvorrichtung gemäss Figur 4A, als Schaltbild.

### Ausführungsbeispiel

Mit Bezug auf die beiliegenden Zeichnungen erfolgt nachstehend die detaillierte Beschreibung der erfindungsgemässen Messvorrichtung für das oben definierte Anwendungsgebiet. Zunächst werden drei charakteristische Typen von Werkbänken beschrieben, für welche die konzipierte Messvorrichtung vorgesehen ist, um für diese Werkbänke Sicherheitstest zuverlässig und effizient durchzuführen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1B

Dieser erste Typ einer Werkbank **1** hat die Gestalt eines einfachen Laborabzugs. Die von einem Gehäuse **11** umgebene Arbeitskammer **13** ruht auf einem Unterbau **10**. Auf der Vorderseite lässt sich eine Frontscheibe **15** hochschieben, um somit eine fensterartige Arbeitsöffnung **14** in die Arbeitskammer **13** freizugeben. Nach unten ist die Arbeitskammer **13** von der Arbeitsfläche **12** begrenzt, auf der typische Laborgegenstände, wie z.B. Geschirrteile, Ständer und Destillatoren, für die durchzuführenden Labortätigkeiten aufgestellt werden können. Rückseitig der Arbeitskammer **13** befindet sich eine Wandung mit Luftschlitzen **17** zur Bildung eines Luftkanals **16.** Über den oben an der Werkbank **1** vorgesehenen Luftanschluss **18** wird an der Werkbank **1** ein Strömungsbild erzeugt, mit Einströmen in die Arbeitsöffnung **14,** einer gewissen rotierenden Strömung in der Arbeitskammer **13** und Strömungsabführung durch die Luftschlitze **17** über den Luftkanal **16** in den Luftanschluss **18.**

### Figuren 2A und 2B

Diese Werkbank **1** zweiten Typs ist als höherwertiger Laborabzug konzipiert und mit einer Filtereinheit **2** und eingebautem Ventilator **20** ausgestattet. Die Luftführung ist partiell rezirkulierend. Vom Sog über den Luftanschluss **18** und dem Ventilator **20** wird Luft durch die offene Arbeitsöffnung **14** angesaugt, ein Teilstrom rotiert in der Arbeitskammer **13,** Luftmengen passieren seitlich die Arbeitsfläche **12,** durchströmen die Filtereinheit **2** und gelangen über den Luftkanal **16** in das obere Plenum, werden dann von hier anteilig über den Luftanschluss **18** abgeführt, und der verbliebene Anteil wird durch die Luftschlitze **17** in die Arbeitskammer **13** zurückgefördert.

### Figuren 3A und 3B

Dieser dritte Typ einer Werkbank 1 ist als Sicherheitswerkbank aufgebaut. Vom im oberen Plenum angeordneten bi-direktional arbeitenden Ventilator **20** wird Luft durch die offene Arbeitsöffnung **14** angesaugt. Innerlich der Arbeitskammer **13,** am Bereich der Arbeitsöffnung **14** abwärts strömt ein Luftvorhang **19.** Seitlich der Arbeitsfläche **12** strömt die Luft durch eine erste Filtereinheit **2** und gelangt in den rückseitigen Luftkanal **16** hin zum Ventilator **20,** der einen Luftanteil über eine zweite Filtereinheit **2** in die Umgebung **U** abführt und den anderen Luftanteil über eine dritte Filtereinheit **2** zurück in die Arbeitskammer **13** als vertikale Liminarströmung drückt.

### Figuren 4A bis 4F und 7

Die Messvorrichtung **3** ruht auf einem Ständer **30,** der durch seine unten anmontierten Bodenrollen **31** mobil und verfahrbar ist. Zum verteilten Einbringen von Testaerosol **49** in die Arbeitskammer **13** sind z.B. zwei auf einem Düsenträger **44** installierte Düsen **43** vorsehen. Der Düsenträger **44** ist entlang der Breitenerstreckung der Arbeitskammer **13** auf einer Transversalachse **x-x** verschiebbar und mit einem Schlitten **34** verbunden. Der Schlitten **34** ist auf einer Führung **32** angeordnet, und am Schlitten **34** sind Gleitrollen **33** vorgesehen. Zur Erzeugung des Testaerosols **49** gibt es einen Vorratsbehälter **4** mit dem darin enthaltenen Testmedium **Tₘ,** wobei in den Vorratsbehälter **4** Druckluft eingespeist wird. Der Vorratsbehälter **4** steht in einer Halterung **4'** und ist integraler Bestandteil der Messvorrichtung **3.** Eine Druckanzeige **41** dient zur Feststellung des im Vorratsbehälter **4** anstehenden Drucks. Über die Druckluftleitung **40,** den Durchflussregler **40'** und das Flowmeter **41'** gelangt die Druckluft in den Vorratsbehälter **4** und entwickelt hier mit den Luftblasen **A_{b}** das Testaerosols **49** als Gemisch aus Luft und dem Testmedium **Tₘ.** Aus dem Vorratsbehälter **4** heraus wird das erzeugte Testaerosol **49** über die Stoffleitung **42** an die Düsen **43** herangeführt. Das Testmedium **Tₘ** ist ein Lösungsmittel, nämlich in Form einer Flüssigkeit, ein Alkohol, wie Isopropanol oder n-Propanol; oder liegt in Form einer Partikelsubstanz, z.B.als Kaliumjodid oder Di-Ethyl-Hexyl-Sebacat (DEHS) vor.

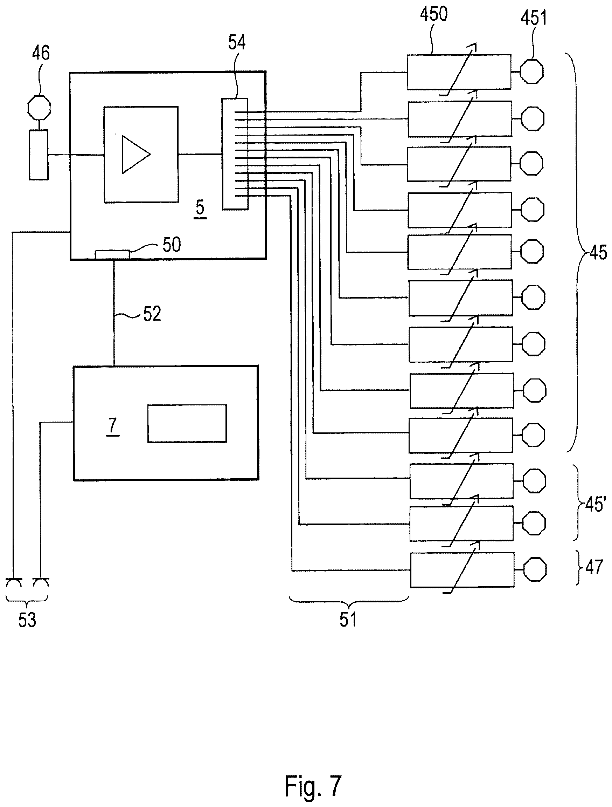

Mit dem Schlitten **34** ist ein zumindest im Wesentlichen ausserhalb der Arbeitskammer **13** positionierter und der Arbeitsöffnung **14** zugewandter Dummy **35** verbunden, der eine Nachbildung eines Oberkörpers einer an der Werkbank **1** tätigen Bedienperson darstellt. Die der Arbeitsöffnung **14** zugewandte Seite des Dummys **35** dient als Träger für die Aussensensoren **45.** Von den Aussensensoren **45** erstreckt sich jeweils eine erste Signalleitung **51** zur einer Elektronikplatine **5,** die ihrerseits über eine zweite Signalleitung **52** mit einer Auswerteeinheit **7** verbunden ist. Die Auswerteeinheit **7** dient zur Protokollierung und Anzeige der ermittelten Messdaten. Jeder Aussensensor **45,** jeder Innensensor **45'** und der Referenzsensor **47** umfassen einen Gassensor **451** sowie jeweils eine zugehörige Justierplatine **450** zur Kalibrierung der von den Gassensoren **451** in der Aerosolwolke **49'** bzw. am Referenzsensor **47** gemessenen Werte. Die Signalleitungen **51** laufen in einer Steckerleiste **54** zusammen. Die zweite Signalleitung **52** ist an einer Steckerverbindung **50** an der Elektronikplatine **5** angeschlossen. Die Auswerteeinheit **7** und die Elektronikplatine **5** sind mit einem Stromanschluss **53** verbunden (s. Figur 7).

Im Aufstellraum der Werkbank **1** ist der Referenzsensor **47** installiert, welcher dazu vorgesehen ist, einen Nullpunktabgleich mit den Aussensensoren **45** zu bewirken, falls diese eine Konzentration an Testmedium **Tₘ** detektieren, welches von einer äusseren Quelle, also nicht aus der Arbeitskammer 13 stammt. Der Referenzsensor **47** liefert seine Messwerte, vorzugsweise über ein erstes Signalkabel **51,** an die Elektronikplatine **5** zwecks Signalverarbeitung. Vom Luftanschluss **18** erstreckt sich eine Unterdruckleitung **48** zum Unterdruck-Flowmeter **46.**

Der Dummy **35** umfasst ferner die Nachbildung der Arme **35'** einer an der Werkbank **1** tätigen Bedienperson, und die Arme **35'** sind im Testbetrieb der Messvorrichtung **3** dazu bestimmt, sich durch die Arbeitsöffnung **14** in die Arbeitskammer **13** zu erstrecken und so die Luftströmung im Bereich der Arbeitsöffnung **14** praxisnah zu gestalten. Die Arme **35'** stützen den Düsenträger **44** sowie einen Störkörper **38,** wobei der Störkörper **38** einen typischerweise auf der Arbeitsfläche **12** stehenden Laborgegenstand zwecks realitätsnaher Ablenkung des Strömungsverlaufs in der Arbeitskammer **13** simuliert und beheizbar sein kann. Solche Laborgegenstände sind z.B. Gefässe, Destillatoren u.ä. Die Arme **35'** haltern ferner ein Stützrad **37,** welches dazu bestimmt ist, im Testbetrieb der Messvorrichtung **3** auf der Arbeitsfläche **12** gewichts-entlastend aufzusetzen und beim Bewegen entlang der Transversalachse **x-x** auf der Arbeitsfläche **12** abzurollen. In der Arbeitskammer **13,** vorzugsweise an den Armen **35',** sind die Innensensoren **45'** zur Messung der in der Arbeitskammer **13** vorhandenen Konzentration an Testmedium **Tm** installiert. Innerlich der Arme **35'** sind die Stoffleitungen **42** zur Beschickung der Düsen **43** geführt. Zur Vervollkommnung gehört zum Dummy **35** auch ein Kopf **36,** an dem ebenfalls ein Aussensensor **45** installiert sein kann, um den Mund- und Nasenbereich einer möglichen Bedienperson in die Messung einzubeziehen.

Am Ende des Testbetriebs kann es wünschenswert sein, die sich im Bereich der Arbeitsöffnung **14** herausgebildete Luftströmung zu visualisieren. Hierzu ist zuvorderst an den Armen **35',** vorzugsweise am Störkörper **38,** ein Nebelauslass **80** vorgesehen, an den eine Stoffleitung **8** für die Prüfnebelzufuhr angeschlossen ist.

### Figuren 5A und 5B

Dieses Figurenpaar illustriert die zuvor beschriebene Messvorrichtung **3** im in die Arbeitskammer **13** einer Werkbank 1 durch die Arbeitsöffnung **14** eingefahren Zustand in einer Mittelposition. Aus dieser Position heraus lässt sich die Messvorrichtung **3** zur Simulation von praxisnahen Bewegungsabläufen entlang der Transversalachse **x-x** beliebig hin- und herfahren, so dass der Strömungsverlauf quasi störend beeinflusst wird.

### Figuren 6A und 6B

Dieses Figurenpaar veranschaulicht die kritische Situation eines durch die Arbeitsöffnung **14** der Werkbank **1** geschehenen, sogenannten Ausbruchs der Aerosolwolke **49',** welche sich bis an die Aussensensoren 45 am Dummy **35** erstreckt. Daraus ist zu schlussfolgern, dass die vorliegende Werkbank **1** wegen Gefährdung für eine Bedienperson mit den gegenwärtigen, beim durchgeführten Sicherheitstest simulierten Arbeitsbedingungen nicht zum Einsatz kommen darf.

## Patentansprüche

1. Messvorrichtung (**3**) zur Durchführung von Sicherheitstests an einer als Containment ausgebildeten und im Betriebsmodus befindlichen Werkbank (**1**), wobei:
a) die von einem Gehäuse (**10**) umgebene Werkbank (**1**) eine interne Arbeitskammer (**13**) mit einer Arbeitsfläche (**12**) sowie eine in die Arbeitskammer (**13**) Zugang gewährende Arbeitsöffnung (**14**) aufweist;
b) die Messvorrichtung (**3**) ein Verteilerorgan (**43**) zum Eintrag eines Testmediums (**Tₘ**) in die Arbeitskammer (**13**) und Aussensensoren (**45**) zur Messung der durch die Arbeitsöffnung (**14**) nach aussen gelangenden Konzentration an Testmedium (**Tₘ**) besitzt; und
c) das Testmedium (**Tₘ**) eine Flüssigkeit oder eine Partikelsubstanz ist, die sich mittels Druckluft als Testaerosol (**49**) über das Verteilerorgan (**43**) in die Arbeitskammer (**13**) verteilen lässt, **dadurch gekennzeichnet, dass**
d) das Verteilerorgan (**43**) zumindest eine, vorzugsweise mehrere Düsen (**43**) umfasst, die auf einem Düsenträger (**44**) positioniert sind; wobei
da) der Düsenträger (**44**) entlang einer Breitenerstreckung der Arbeitskammer (**13**) auf einer Transversalachse (**x-x**) verschiebbar und mit einem Schlitten (**34**) verbunden ist; und
db) der Schlitten (**34**) auf einer Führung (**32**) angeordnet ist; und
e) mit dem Schlitten (**34**) ein zumindest im Wesentlichen ausserhalb der Arbeitskammer (**13**) positionierbarer und der Arbeitsöffnung (**14**) zugewandter Dummy (**35**) verbunden ist, wobei:
ea) der Dummy (**35**) eine Nachbildung eines Oberkörpers einer an der Werkbank (**1**) tätigen Bedienperson darstellt; und
eb) die der Arbeitsöffnung (**14**) zugewandte Seite des Dummys (**35**) als Träger für die Aussensensoren (**45**) dient.

2. Messvorrichtung (**3**) nach Anspruch 1, **dadurch gekennzeichnet, dass** zur Erzeugung des Testaerosols (**49**) ein Vorratsbehälter (**4**) mit dem darin enthaltenen Testmedium (**Tₘ**) und in den Vorratsbehälter (**4**) eingespeiste Druckluft vorgesehen ist.

3. Messvorrichtung (3) nach Anspruch 2, **dadurch gekennzeichnet, dass** der Vorratsbehälter (4) integraler Bestandteil der Messvorrichtung (3) ist.

4. Messvorrichtung (3) nach zumindest einem der Ansprüche 1 bis 3, **dadurch gekennzeichnet, dass** das Testmedium (**Tₘ**):
a) ein Lösungsmittel ist, nämlich in Form einer Flüssigkeit, ein Alkohol, wie Isopropanol oder n-Propanol; oder
b) eine Partikelsubstanz ist, wie Kaliumjodid oder Di-Ethyl-Hexyl-Sebacat (DEHS).

5. Messvorrichtung (**3**) nach zumindest einem der Ansprüche 1 bis 4, **dadurch gekennzeichnet, dass** der Dummy (**35**) ferner die Nachbildung der Arme (**35**') einer an der Werkbank (**1**) tätigen Bedienperson umfasst, und die Arme (**35**') im Testbetrieb der Messvorrichtung (**3**) dazu bestimmt sind, sich durch die Arbeitsöffnung (**14**) in die Arbeitskammer (**13**) zu erstrecken und so die Luftströmung im Bereich der Arbeitsöffnung (**14**) praxisnah zu gestalten.

6. Messvorrichtung (**3**) nach Anspruch 5, **dadurch gekennzeichnet, dass** die Arme (**35'**) den Düsenträger (**44**) sowie einen Störkörper (**38**) stützen, wobei der Störkörper (**38**) einen typischerweise auf der Arbeitsfläche (**12**) stehenden Laborgegenstand zwecks realitätsnaher Ablenkung des Strömungsverlaufs in der Arbeitskammer (**13**) simuliert und beheizbar sein kann.

7. Messvorrichtung (**3**) nach zumindest einem der Ansprüche 5 oder 6, **dadurch gekennzeichnet, dass** die Arme (**35'**) ferner ein Stützrad (**37**) haltern, welches dazu bestimmt ist, im Testbetrieb der Messvorrichtung (**3**) auf der Arbeitsfläche (**12**) gewichts-entlastend aufzusetzen und beim Bewegen entlang der Transversalachse (**x-x**) auf der Arbeitsfläche (**12**) abzurollen.

8. Messvorrichtung (3) nach zumindest einem der Ansprüche 5 bis 7, **dadurch gekennzeichnet, dass** in der Arbeitskammer (**13**), vorzugsweise an den Armen (**35'**), Innensensoren (**45'**) zur Messung der in der Arbeitskammer (**13**) vorhandenen Konzentration an Testmedium (**Tₘ**) installiert sind.

9. Messvorrichtung (**3**) nach zumindest einem der Ansprüche 5 bis 8, **dadurch gekennzeichnet, dass** innerlich der Arme (**35'**) Stoffleitungen (**42**) zur Beschickung der Düsen (**43**) geführt sind.

10. Messvorrichtung (**3**) nach zumindest einem der Ansprüche 1 bis 9, **dadurch gekennzeichnet, dass**
a) im Aufstellraum der Werkbank (**1**) ein Referenzsensor (**47**) installiert ist, welcher dazu vorgesehen ist, einen Nullpunktabgleich mit den Aussensensoren (**45**) zu bewirken, falls diese eine Konzentration an Testmedium (**Tₘ**) detektieren, welches von einer äusseren Quelle, also nicht aus der Arbeitskammer (**13**) stammt; und
b) der Referenzsensor (**47**) Messwerte, vorzugsweise über ein Signalkabel (51), an eine Elektronikplatine (**5**) zwecks Signalverarbeitung liefert.

11. Messvorrichtung (3) nach Anspruch 10, **dadurch gekennzeichnet, dass**
a) die Messvorrichtung (**3**) eine Auswerteeinheit (**7**) zur Protokollierung und Anzeige der ermittelten Messdaten umfasst; und
b) jeder Aussensensor (**45**), jeder Innensensor (**45'**) und der Referenzsensor (**47**) einen Gassensor (**451**) sowie jeweils eine zugehörige Justierplatine (**450**) zur Kalibrierung der von den Gassensoren (**451**) in einer Aerosolwolke (**49'**) bzw. am Referenzsensor (**47**) gemessenen Werte umfasst.

12. Messvorrichtung (**3**) nach zumindest einem der Ansprüche 6 bis 11, **dadurch gekennzeichnet, dass** zur Visualisierung der sich im Bereich der Arbeitsöffnung (**14**) herausgebildeten Luftströmung zuvorderst an den Armen (**35'**), vorzugsweise am Störkörper (**38**), ein Nebelauslass (**80**) vorgesehen ist, an den eine Stoffleitung (**8**) für die Prüfnebelzufuhr angeschlossen ist.

13. Messvorrichtung (**3**) nach zumindest einem der Ansprüche 1 bis 12, **dadurch gekennzeichnet, dass** die Messvorrichtung (**3**) auf einem mobilen, vorzugsweise verfahrbaren, Ständer (**30**) angeordnet ist.

## Claims

1. Measuring device (**3**) for performing safety tests at a workbench (1) which is formed as a containment and is in operating mode, wherein:
a) the workbench (**1**), surrounded by a housing (**10**), has an internal working chamber (**13**) with a working surface (**12**) and also a working opening (**14**) affording access to the working chamber (**13**);
b) the measuring device (**3**) has a distributor element (**43**) for introducing a test medium (**Tₘ**) into the working chamber (**13**) and external sensors (**45**) for measuring the concentration of test medium (**Tₘ**) reaching the outside through the working opening (**14**); and
c) the test medium (**Tₘ**) is a liquid or a particle substance which allows itself to be distributed by means of compressed air as a test aerosol (49) in the working chamber (**13**) by way of the distributor element (**43**), **characterized in that**
d) the distributor element (**43**) comprises at least one nozzle (**43**), preferably a number of nozzles (**43**), which are positioned on a nozzle carrier (**44**); wherein
da) the nozzle carrier (**44**) can be displaced along a widthwise extent of the working chamber (**13**) on a transversal axis (**x-x**) and is connected to a carriage (**34**); and
db) the carriage (**34**) is arranged on a guide (**32**); and
e) connected to the carriage (**34**) is a dummy (**35**), which can be positioned substantially outside the working chamber (**13**) and is facing the working opening (**14**), wherein:
ea) the dummy (**35**) represents a replica of an upper body of an operator working at the workbench (**1**); and
eb) the side of the dummy (**35**) that is facing the working opening (**14**) serves as a carrier for the external sensors (**45**).

2. Measuring device (**3**) according to Claim 1, **characterized in that** a storage container (**4**), with the test medium (**Tₘ**) contained therein and compressed air fed into the storage container (**4**), is provided for producing the test aerosol (**49**).

3. Measuring device (**3**) according to Claim 2, **characterized in that** the storage container (**4**) is an integral part of the measuring device (**3**).

4. Measuring device (**3**) according to at least one of Claims 1 to 3, **characterized in that** the test medium (**Tₘ**):
a) is a solvent, specifically in the form of a liquid, an alcohol, such as isopropanol or n-propanol; or
b) is a particle substance, such as potassium iodide or di-ethyl-hexyl-sebacate (DEHS).

5. Measuring device (**3**) according to at least one of Claims 1 to 4, **characterized in that** the dummy (**35**) also replicates the arms (**35'**) of an operator working at the workbench (**1**), and the arms (**35'**) are intended to extend through the working opening (**14**) into the working chamber (**13**) in the test mode of the measuring device (**3**), and thus realistically reproduce the air flow in the region of the working opening (**14**).

6. Measuring device (**3**) according to Claim 5, **characterized in that** the arms (**35'**) support the nozzle carrier (**44**) and also a disturbing body (**38**), wherein the disturbing body (**38**) simulates a laboratory object typically to be found on the working surface (**12**) for the purpose of realistically diverting the flow path in the working chamber (**13**) and may be heatable.

7. Measuring device (**3**) according to at least one of Claims 5 or 6, **characterized in that** the arms (**35'**) also hold a supporting wheel (**37**), which is intended to set down on the working surface (**12**) in a weight-relieving manner in the test mode of the measuring device (**3**) and to roll on the working surface (**12**) during the movement along the transversal axis (**x-x**).

8. Measuring device (**3**) according to at least one of Claims 5 to 7, **characterized in that** internal sensors (**45'**), for measuring the concentration of test medium (**Tₘ**) present in the working chamber (**13**), are installed in the working chamber (**13**), preferably on the arms (**35'**).

9. Measuring device (**3**) according to at least one of Claims 5 to 8, **characterized in that** substance lines (**42**) for charging the nozzles (43) are conducted within the arms (**35'**).

10. Measuring device (**3**) according to at least one of Claims 1 to 9, **characterized in that**
a) installed in the setting-up space of the workbench (**1**) is a reference sensor (**47**), which is intended to bring about a zero-point adjustment with the external sensors (**45**) if they detect a concentration of test medium (**Tₘ**) that originates from an outside source, that to say not from the working chamber (**13**); and
b) the reference sensor (**47**) delivers measured values, preferably via a signal cable (**51**), to an electronics board (**5**) for the purpose of signal processing.

11. Measuring device (**3**) according to Claim 10, **characterized in that**
a) the measuring device (**3**) comprises an evaluation unit (**7**) for logging and displaying the measurement data determined; and
b) each external sensor (**45**), each internal sensor (**45'**) and the reference sensor (**47**) comprise a gas sensor (**451**) and also in each case an associated adjusting board (**450**) for calibrating the values measured by the gas sensors (**451**) in an aerosol cloud (**49'**) or at the reference sensor (**47**).

12. Measuring device (3) according to at least one of Claims 6 to 11, **characterized in that**, for visualizing the air flow formed in the region of the working opening (**14**), first a mist outlet (**80**), to which a substance line (**8**) for supplying the test mist is connected, is provided on the arms (**35'**), preferably on the disturbing body (**38**).

13. Measuring device (**3**) according to at least one of Claims 1 to 12, **characterized in that** the measuring device (**3**) is arranged on a mobile, preferably displaceable, stand (**30**).

## Revendications

1. Dispositif de mesure (**3**) permettant d'effectuer des essais de sécurité sur un établi (**1**) réalisé sous forme d'enceinte de confinement et se trouvant en mode de fonctionnement, dans lequel:
a) l'établi (**1**) entouré d'un bâti (**10**) présente une chambre de travail interne (**13**) dotée d'une surface de travail (**12**) ainsi que d'une ouverture de travail (**14**) donnant accès à la chambre de travail (**13**);
b) le dispositif de mesure (**3**) dispose d'un élément de distribution (**43**) pour charger un milieu d'essai (**Tₘ**) dans la chambre de travail (**13**) et de capteurs extérieurs (**45**) pour mesurer la concentration en milieu d'essai (**Tₘ**) atteignant l'extérieur en passant par l'ouverture de travail (**14**); et
c) le milieu d'essai (**Tₘ**) est un liquide ou une matière particulaire qui peut être réparti(e) au moyen d'air comprimé sous la forme d'un aérosol d'essai (**49**) par l'intermédiaire de l'élément de distribution (**43**) dans la chambre de travail (**13**), **caractérisé en ce que**
d) l'élément de distribution (**43**) comprend au moins une, de préférence plusieurs buses (**43**) qui sont positionnées sur un support de buses (**44**); dans lequel
da) le support de buses (**44**) est coulissant le long d'une extension de largeur de la chambre de travail (**13**) sur un axe transversal (**x-x**) et relié à un chariot (**34**); et
db) le chariot (**34**) est disposé sur un guidage (**32**); et
e) un mannequin (**35**) pouvant être positionné au moins substantiellement à l'extérieur de la chambre de travail (**13**) et étant tourné vers l'ouverture de travail (**14**) est relié au chariot (34), dans lequel:
ea) le mannequin (**35**) représente une reproduction d'une partie supérieure du corps d'un opérateur travaillant sur l'établi (**1**); et
eb) le côté du mannequin (**35**) tourné vers l'ouverture de travail (**14**) sert de support pour les capteurs extérieurs (**45**).

2. Dispositif de mesure (**3**) selon la revendication 1, caractérisé en ce qu'un réservoir de stockage (**4**) avec le milieu d'essai (**Tₘ**) contenu dans celui-ci et de l'air comprimé alimenté dans le réservoir de stockage (**4**) est prévu pour produire l'aérosol d'essai (**49**).

3. Dispositif de mesure (**3**) selon la revendication 2, **caractérisé en ce que** le réservoir de stockage (**4**) fait partie intégrante du dispositif de mesure (**3**).

4. Dispositif de mesure (**3**) selon au moins l'une des revendications 1 à 3, **caractérisé en ce que** le milieu d'essai (**Tₘ**):
a) est un solvant, notamment sous la forme d'un liquide, un alcool, comme l'isopropanol ou le n-propanol; ou
b) une matière particulaire, comme l'iodure de potassium ou le di-éthylhexyl-sébacate (DEHS).

5. Dispositif de mesure (**3**) selon au moins l'une des revendications 1 à 4, **caractérisé en ce que** le mannequin (**35**) comprend en outre une reproduction des bras (**35'**) d'un opérateur travaillant sur l'établi (**1**), et lors du fonctionnement d'essai du dispositif de mesure (**3**), les bras (**35'**) sont destinés à s'étendre à travers l'ouverture de travail (**14**) dans la chambre de travail (**13**) et à configurer ainsi de manière pratique le flux d'air au niveau de l'ouverture de travail (**14**).

6. Dispositif de mesure (**3**) selon la revendication 5, **caractérisé en ce que** les bras (**35'**) soutiennent le support de buses (**44**) ainsi qu'un corps perturbateur (**38**), dans lequel le corps perturbateur (**38**) simule un objet de laboratoire typiquement debout sur la surface de travail (**12**) pour une déviation réaliste du trajet d'écoulement dans la chambre de travail (**13**) et peut être chauffable.

7. Dispositif de mesure (**3**) selon au moins l'une des revendications 5 ou 6, **caractérisé en ce que** les bras (**35'**) maintiennent en outre une roue de support (**37**) qui, pendant le fonctionnement d'essai du dispositif de mesure (**3**), est destinée à se poser en déchargeant le poids sur la surface de travail (**12**) et à rouler sur la surface de travail (**12**) lors d'un mouvement le long de l'axe transversal (**x-x**).

8. Dispositif de mesure (**3**) selon au moins l'une des revendications 5 à 7, **caractérisé en ce que** dans la chambre de travail (**13**), de préférence sur les bras (**35'**), des capteurs intérieurs (**45'**) sont installés pour mesurer la concentration en milieu d'essai (**Tₘ**) présente dans la chambre de travail (**13**).

9. Dispositif de mesure (**3**) selon au moins l'une des revendications 5 à 8, caractérisé en ce qu'à l'intérieur des bras (**35'**) des conduites de matière (**42**) sont guidées pour charger les buses (**43**).

10. Dispositif de mesure (**3**) selon au moins l'une des revendications 1 à 9, **caractérisé en ce que**
a) dans l'espace d'implantation de l'établi (**1**), un capteur de référence (**47**) est installé qui est prévu pour provoquer un rapprochement de point zéro avec les capteurs extérieurs (**45**) si ceux-ci détectent une concentration en milieu d'essai (**Tₘ**) qui provient d'une source extérieure, donc qui ne provient pas de la chambre de travail (**13**); et
b) le capteur de référence (**47**) fournit des valeurs mesurées, de préférence par un câble de signalisation (**51**), à une platine électronique (**5**) en vue d'un traitement de signal.

11. Dispositif de mesure (**3**) selon la revendication 10, **caractérisé en ce que**
a) le dispositif de mesure (**3**) comprend une unité d'évaluation (**7**) pour documenter et afficher les données de mesure déterminées; et
b) chaque capteur extérieur (**45**), chaque capteur intérieur (**45'**) et le capteur de référence (**47**) comprennent un capteur de gaz (**451**) ainsi qu'une platine d'ajustage associée (**450**) pour calibrer les valeurs mesurées par les capteurs de gaz (**451**) dans un nuage d'aérosol (**49'**) ou au niveau du capteur de référence (**47**).

12. Dispositif de mesure (**3**) selon au moins l'une des revendications 6 à 11, **caractérisé en ce qu'**une sortie de brouillard (**80**), à laquelle est connectée une conduite de matière (**8**) pour l'approvisionnement en brouillard d'essai, est prévue avant tout sur les bras (**35'**), de préférence sur le corps perturbateur (**38**), pour la visualisation du flux d'air formé au niveau de l'ouverture de travail (**14**).

13. Dispositif de mesure (**3**) selon au moins l'une des revendications 1 à 12, **caractérisé en ce que** le dispositif de mesure (**3**) est disposé sur un montant mobile (**30**), de préférence déplaçable.
